# EUROPÄISCHE PATENTSCHRIFT

(11) **EP 2 028 049 B1**
(45) Veröffentlichungstag und Bekanntmachung des Hinweises auf die Patenterteilung: **29.09.2010**
(21) Anmeldenummer: 08009788.4
(22) Anmeldetag: 29.05.2008
(51) Int. Cl.: B60R 5/04

(54) **Abdeckanordnung**
Compartment cover assembly
Dispositif de recouvrement

(30) Priorität: 23.08.2007 DE 102007039859
(43) Veröffentlichungstag der Anmeldung: 25.02.2009
(73) Patentinhaber: Dr. Ing. h.c. F. Porsche AG, 70435 Stuttgart (DE)
(72) Erfinder: Hofmann, Peter, 75242 Neuhausen (DE)

(56) Entgegenhaltungen:
- EP-A- 0 234 497
- EP-A- 1 243 475
- US-A1- 2005 023 854

## Beschreibung

Die vorliegende Erfindung betrifft eine Abdeckanordnung mit einer hinter einem Fahrzeugsitz angeordneten Laderaumabdeckung in einem Kraftfahrzeug gemäß dem Oberbegriff des Anspruchs 1. Die Erfindung betrifft außerdem ein mit einer derartigen Abdeckanordnung ausgestattetes Kraftfahrzeug.

Aus der DE 39 22 450 C2 ist eine gattungsgemäße Abdeckanordnung bekannt, bei welcher ein sich in Fahrzeugquerrichtung erstreckendes Abdeckrollo mit seinen Längsenden in entsprechende fahrzeugseitige Ausnehmungen in im Wesentlichen vertikaler Richtung eingeführt und dort verrastet wird. Das Abdeckrollo greift dabei formschlüssig in die fahrzeugseitigen Ausnehmungen ein und weist vorgespannte Zapfen auf, welche das Abdeckrollo in den zugehörigen Ausnehmungen sichern. Zum Lösen dieser federvorgespannten Zapfen ist ein von außen leicht zugängliches Betätigungsglied vorgesehen, welches einen Betätigungsweg aufweist, der rechtwinklig zum Verschiebeweg des zugehörigen Zapfens liegt.

Insbesondere bei coupeartigen Kraftfahrzeugen ergibt sich ein tunnelartiger hinter den Fondsitzen liegender Bereich, in welchem eine Laderaumabdeckung wegen des Gewichts derselben nur schwer eingesetzt werden kann, da man üblicherweise weit entfernt von den Aufnahmen für die Laderaumabdeckung hinter dem Fahrzeug steht. Rückt man jedoch die Laderaumabdeckung sehr weit nach hinten, um beispielsweise eine erleichterte Montage gewährleisten zu können, steht die Laderaumabdeckung einer einfachen Beladung des Kofferraumes im Weg. Außerdem sind für den Bereich zwischen den Sitzlehnen und der Laderaumabdeckung zusätzliche großflächige Abdeckungen notwendig, welche für den Fall einer Herausnahme separat zu entnehmen sind.

Die EP-A-0 234 497 offenbart eine Abdeckanordnung mit einer hinter einem Fahrzeugsitz, insbesondere hinter einem Fondsitz, angeordneten Laderaumabdeckung in einem Kraftfahrzeug, welche sich in Fahrzeugquerrichtung erstreckt und mit ihren Längsenden in entsprechenden fahrzeugseitigen Aufnahmen gehalten ist, wobei die Laderaumabdeckung in horizontaler Richtung in die fahrzeugseitigen Aufnahmen einführbar ist.

Bei dieser Abdeckanordnung sind beide fahrzeugseitigen Aufnahmen nach hinten hin offen ausgebildet, so dass die Laderaumabdeckung bei geöffneter Heckklappe von der Fahrzeugaußenseite her horizontal in beide Aufnahmen einschiebbar und in den Aufnahmen verrastbar ist.

Der vorliegenden Erfindung liegt die Aufgabe zugrunde, für eine gattungsgemäße Laderaumanordnung eine verbesserte Ausführungsform anzugeben, welche sich insbesondere durch eine erleichterte Montage bzw. Demontage einer Laderaumabdeckung auszeichnet.

Die Erfindung löst diese Aufgabe durch den Gegenstand des Anspruchs 1. Vorteilhafte Ausführungsformen sind Gegenstände der Unteransprüche.

Die Erfindung beruht auf dem allgemeinen Gedanken, eine Laderaumabdeckung zu schaffen, welche mit ihren Längsenden in fahrzeugseitigen Aufnahmen gehalten ist und wobei diese Aufnahmen unmittelbar hinter einem Fahrzeugsitz angeordnet und derart ausgebildet sind, dass eine Montage bzw. Demontage der Laderaumabdeckung von einem Fahrgastraum aus möglich ist, indem die Laderaumabdeckung mit einem Längsende in eine fahrerseitig oder beifahrerseitige Aufnahme horizontal einsteckbar ist, während sie mit ihrem anderen Längsende entgegen der Fahrtrichtung des Kraftfahrzeuges in die gegenüberliegende Aufnahme einschwenkbar und in dieser verrastbar ist. Durch die Montagemöglichkeit der erfindungsgemäßen Laderaumabdeckung vom Fahrgastraum aus, können die aus dem Stand der Technik bekannten Nachteile, wie insbesondere eine Einschränkung eines heckseitigen Beladequerschnittes sowie ein schwieriger Montage- bzw. Demontagevorgang vom Laderaum des Kraftfahrzeuges aus vermieden werden, wodurch einerseits der Beladevorgang erleichtert und andererseits der Komfort für den Fahrer des Kraftfahrzeuges, insbesondere beim Montieren bzw. Demontieren der Laderaumabdeckung gesteigert werden können. Ob dabei die fahrer- oder die beifahrerseitige Aufnahme als Steckaufnahme und die gegenüberliegende Aufnahme zum Einschwenken der Laderaumabdeckung ausgebildet sind, kann individuell, beispielsweise je nach Fahrzeugtyp, festgelegt werden.

Zweckmäßig ist im Bereich der fahrerseitigen oder der beifahrerseitigen Aufnahme eine elektrische Kontakteinrichtung vorgesehen, über welche eine, einen elektrischen Antrieb aufweisende Laderaumabdeckung in eingebautem Zustand mit einem elektrischen Bordnetz des Kraftfahrzeuges verbunden ist. Insbesondere bei höherwertigen Kraftfahrzeugen kann eine Laderaumabdeckung mit einem elektrischen Antrieb zum Einrollen bzw. Ausfahren eines Gepäckraumrollos vorgesehen sein, wobei der Antrieb zur Betätigung mit dem elektrischen Bordnetz des Kraftfahrzeuges verbunden werden muss. Die erfindungsgemäße Kontakteinrichtung ermöglicht in einfacher Weise ein elektrisches Kontaktieren zwischen dem elektrischen Antrieb der Laderaumabdeckung einerseits und dem elektrischen Bordnetz des Kraftfahrzeugs andererseits, so dass auch eine Laderaumabdeckung mit einem derartigen elektrischen Antrieb in ähnlich einfacher Weise montierbar bzw. demontierbar ist, wie eine Laderaumabdeckung ohne elektrischen Antrieb.

Bei einer weiteren vorteilhaften Ausführungsform der erfindungsgemäßen Lösung ist die Laderaumabdeckung unmittelbar hinter dem Fahrzeugsitz angeordnet oder weist zumindest eine Spaltabdeckung auf, welche insbesondere bei Fahrzeugsitzen mit verstellbaren Rücklehnen einen Spalt zwischen der Rückenlehne und der Laderaumabdeckung abdecken. Bei einer Anordnung der erfindungsgemäßen Laderaumabdeckung direkt hinter den Fahrzeugsitzen, kann auf eine Spaltabdeckung üblicherweise verzichtet werden, während bei Kraftfahrzeugsitzen, insbesondere bei Fondsitzen, mit verstellbaren Rückenlehnen je nach Stellung derselben ein Spalt zwischen der Rückenlehne und der Laderaumabdeckung verbleibt, welcher dann von der erfindungsgemäßen Spaltabdeckung, welche vorzugsweise in Richtung der Rückenlehne vorspannt ist, abgedeckt werden kann, so dass ein geschlossenes Erscheinungsbild erzeugt werden kann. Gleichzeitig ermöglicht die Spaltabdeckung einen Sichtschutz auf unter der Laderaumabdeckung verstautem Ladegut sowie einem Schutz desselben vor Verschmutzung.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch,
- Fig. 1: einen Längsschnitt durch einen Heckbereich eines Kraftfahrzeuges mit einer erfindungsgemäßen Abdeckanordnung,
- Fig. 2: eine beifahrerseitige Aufnahme für eine erfindungsgemäße Laderaumabdeckung,
- Fig. 3: eine fahrerseitige Aufnahme für die Laderaumabdeckung,
- Fig. 4: eine Laderaumabdeckung beim Einbau in die fahrzeugseitigen Aufnahmen.

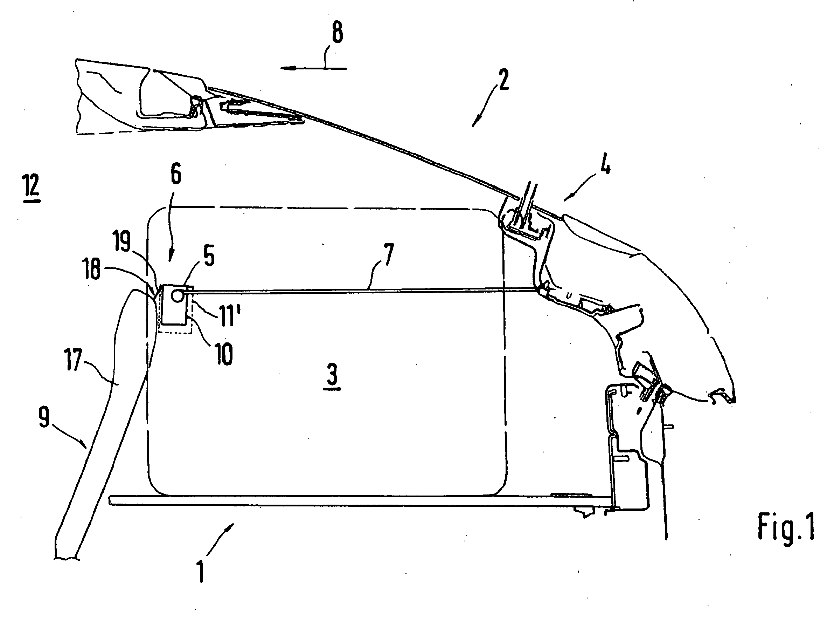

Entsprechend Fig. 1 weist ein Heckbereich 1 eines Kraftfahrzeuges, insbesondere eines coupeartigen Sportwagens 2, einen Laderaum 3 auf, welcher üblicherweise über eine Heckklappe 4 zugänglich ist. Um einen Blick auf direkt unter der Heckklappe 4 gelagertes bzw. verstautes Ladegut verhindern zu können, ist eine Laderaumabdeckung 5 vorgesehen, welche Teil einer Abdeckanordnung 6 ist. Die Laderaumabdeckung 5 weist ein kastenartiges Gehäuse auf, in welchem vorzugsweise unter Federvorspannung ein Abdeckrollo 7 aufgewickelt ist, wobei das Abdeckrollo 7 zum Sichtschutz entgegen der Fahrtrichtung 8 aus dem Gehäuse der Laderaumabdeckung 5 ausgezogen und mit seinem in Ausziehrichtung vorderen Ende an der Heckklappe 4 bzw. an einem anderen kraftfahrzeugseitigen Anbindungspunkt befestigt werden kann. Die Abdeckanordnung 6 kann neben der in Betriebsstellung etwa horizontal ausgerichteten Laderaumabdeckung 5 zusätzlich noch ein sich etwa in vertikaler Richtung erstreckendes Sonnen- oder Sichtschutzrolle enthalten (in den Fig. nicht näher dargestellt). Das Sonnen- oder Sichtschutzrollo kann entweder im Gehäuse der Laderaumabdeckung oder in einem separaten Gehäuse untergebracht sein.

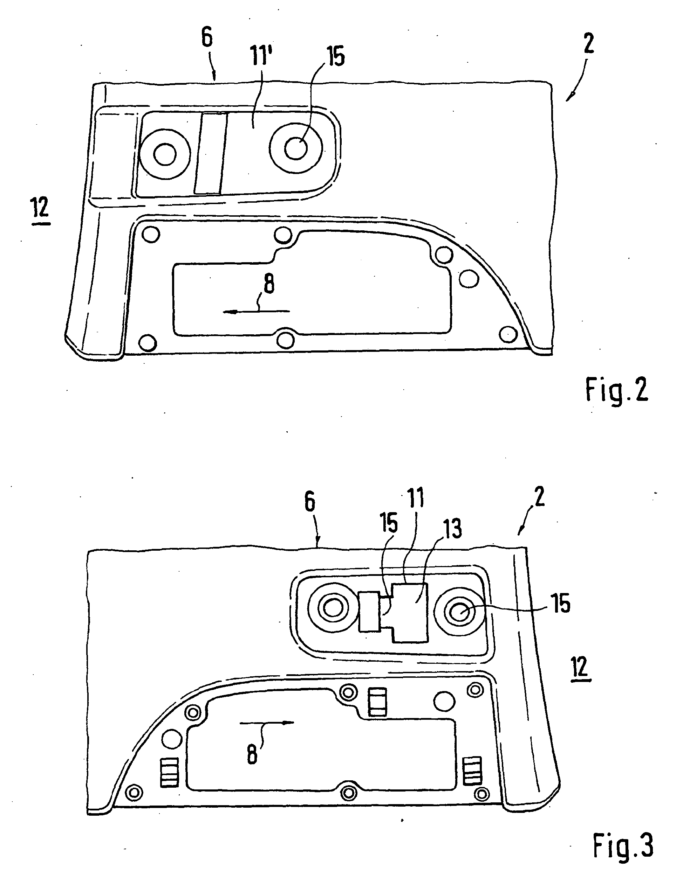

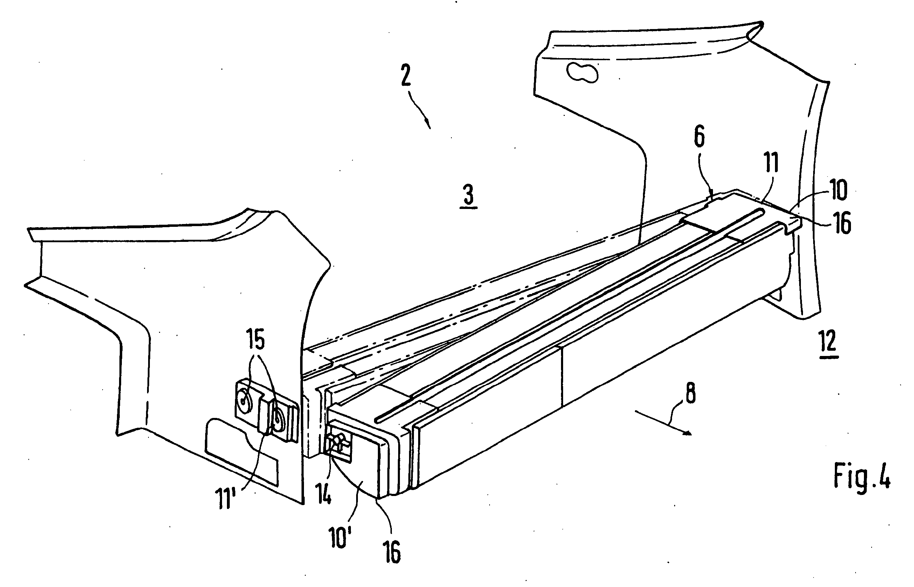

Wie der Fig. 1 zu entnehmen ist, ist die Laderaumabdeckung 5 unmittelbar hinter einem Fahrzeugsitz 9 angeordnet, welcher insbesondere als Fondsitz ausgebildet sein kann. Die Laderaumabdeckung 5 weist dabei eine längliche Gestalt auf und erstreckt sich im wesentlichen in Fahrzeugquerrichtung. Mit ihren Längsenden 10, 10' (vgl. Fig. 4) ist die Laderaumabdeckung 5 in fahrzeugseitigen Aufnahmen 11 und 11' gehalten. Beispiele für derartige fahrzeugseitigen Aufnahmen 11 und 11' sind detailliert in den Fig. 2 und 3 dargestellt. Erfindungsgemäß ist nun die fahrerseitige Aufnahme 11 (vgl. Fig. 2) derart ausgebildet, dass das eine Längsende 10 der Laderaumabdeckung 5 horizontal einsteckbar ist, während die beifahrerseitige Aufnahme 11' (vgl. Fig. 3) derart ausgebildet ist, dass das andere Längsende 10' der Laderaumabdeckung 5 entgegen der Fahrtrichtung 8 des Fahrzeuges 2 in die Aufnahme 11' einschwenkbar und in dieser verrastbar ist. Selbstverständlich ist auch denkbar, dass die Aufnahme 11 gemäß Fig. 3 auf der Beifahrerseite und die Aufnahme 11' gemäß Fig. 2 auf der Fahrerseite angeordnet sind.

Alternativ können auch beide Aufnahmen 10' und 11' nach vorn geöffnet sein und ein einfaches Einschieben der Laderaumabdeckung 5 entgegen der Fahrtrichtung - ähnlich einer Schublade - erlauben.

Durch die Anordnung der Laderaumabdeckung 5 unmittelbar hinter den Fahrzeugsitzen 9 ist eine Montage bzw. eine Demontage der Laderaumabdeckung 5 von einem Fahrgastraum 12 aus möglich.

Die fahrzeugseitigen Aufnahmen 11, 11' können dabei an einer Innenverkleidung des Kraftfahrzeuges 2 und insbesondere im Bereich einer C-Säule des Kraftfahrzeuges 2 angeordnet sein. Darüber hinaus sind die fahrzeugseitigen Aufnahmen 11, 11' vorzugsweise als vertiefte, beispielsweise in die Innenverkleidung hinein vertiefte Aufnahmen 11, 11' ausgebildet.

Die Laderaumabdeckung 5 kann darüber hinaus mit einem elektrischen Antrieb ausgestattet sein, welcher einen Einroll- bzw. Ausrollvorgang des Abdeckrollos 7 zumindest unterstützt. Hierzu ist eine elektrische Kontaktierung zwischen dem elektrischen Antrieb der Laderaumabdeckung 5 und einem elektrischen Bordnetz des Kraftfahrzeuges erforderlich. Dabei ist denkbar, dass in der fahrerseitigen bzw. in der beifahrerseitigen Aufnahme 11, 11' eine elektrisch Kontakteinrichtung 13 vorgesehen ist, über welche die einen elektrischen Antrieb aufweisende Laderaumabdeckung 5 in eingebautem Zustand mit dem elektrischen Bordnetz des Kraftfahrzeuges 2 verbunden ist. Durch die Kontakteinrichtung 13 ist somit ein Montage- bzw. Demontagevorgang der Laderaumabdeckung 5 mit einem elektrischen Antrieb ähnlich einfach wie bei einer Laderaumabdeckung 5 ohne elektrischen Antrieb.

Zur sicheren Halterung der Laderaumabdeckung 5 in den Aufnahmen 11 und 11' können an dem jeweiligen Längsende 10, 10' der Laderaumabdeckung 5 Rastelemente 14 vorgesehen sein, welche mit entsprechenden Gegenrastelementen oder Rastöffnungen 15 in den Aufnahmen 11 und 11' verrastbar sind. Die Rastelemente 14 können beispielsweise als federbeaufschlagte Rastnasen ausgebildet sein, welche in Längsrichtung der Laderaumabdeckung 5 von dieser weg vorgespannt sind und in dieser vorgespannten Lage in die fahrzeugseitigen Rastöffnungen 15 eingreifen. Denkbar ist hierbei auch, dass zumindest eine weitere Federeinrichtung vorgesehen ist, über welche zumindest eine Längsendkappe 16 der Laderaumabdeckung 5 in Längsrichtung der Laderaumabdeckung 5 von dieser weg vorgespannt ist, wobei die Sicherung der Laderaumabdeckung 5 dann über die federbeaufschlagte Längsendkappe 16 in der jeweiligen Aufnahme 11, 11' erfolgt.

Ein Ein- bzw. Ausbau der Laderaumabdeckung 5 erfolgt dabei wie folgt:
Vorab müssen bzw. sollten die Rückenlehnen 17 der Fahrzeugsitze 9 in Fahrtrichtung 8 nach vorne umgeklappt werden, um einen ungehinderten Zugang zu der Laderaumabdeckung 5 zu erhalten. Hierbei ist denkbar, dass die mit der Montage bzw. Demontage der Laderaumabdeckung 5 beschäftigte Person auf einer Rückseite der umgeklappten Rückenlehne 17 absitzen kann, wodurch die Person nahe an den Schwerpunkt der Laderaumabdeckung 5 gelangt, so dass letztere selbst bei Ausrüstung mit einem elektrischen Antrieb sehr gezielt und ohne große Anstrengung aus den seitlichen Aufnahmen 11, 11' entnommen, bzw. in diese eingesetzt werden kann. Dann wird die Laderaumabdeckung 5 vom Fahrgastraum 12 aus mit ihrem einen Längsende 10 in die fahrerseitige Aufnahme 11 im wesentlichen horizontal eingesteckt um anschließend mit ihrem zweiten Längsende 10' in die beifahrerseitige Aufnahme 11' entgegen der Fahrtrichtung 8 eingeschwenkt werden zu können. Nach Erreichen ihrer Einbaulage wird die Laderaumabdeckung 5 über Rastelemente 14 sicher in den jeweiligen Aufnahmen 11, 11' gehalten. Ein Ausbauvorgang der Laderaumabdeckung 5 erfolgt in umgekehrter Weise, wobei zunächst die Rastelemente 14 entriegelt und dann die Laderaumabdeckung 5 mit ihrem Längsende 10' in Fahrtrichtung 8 des Kraftfahrzeuges 2 aus der Aufnahme 11' herausgeschwenkt wird, um anschließend mit ihrem anderen Längsende 10 aus der Aufnahme 11 herausgezogen werden zu können.
Handelt es sich bei den Fahrzeugsitzen 9 um einen Fahrer- bzw. einen Beifahrersitz, so kann dessen Rückenlehne 17 üblicherweise verstellt werden, was zu einem mehr oder weniger breiten Spalt 18 zwischen der Rückenlehne 17 und der Laderaumabdeckung 5 führt. Um einen derartigen Spalt 18 zuverlässig abdecken zu können ist denkbar, dass die Laderaumabdeckung 5 eine Spaltabdeckung 19, beispielsweise eine Klappe aufweist, welche den zwischen Rückenlehne 17 und Laderaumabdeckung 5 entstehenden Spalt 18 flexibel abdeckt. Dabei kann die Spaltabdeckung 19 in Richtung der Rückenlehne 17 mittels einer Federeinrichtung vorgespannt sein. Selbstverständlich ist auch denkbar, dass auf eine derartige Spaltabdeckung 19 verzichtet werden kann, sofern es sich bei den Fahrzeugsitzen 9 um Sitze mit nicht verstellbarer Rückenlehne 17 handelt und die Laderaumabdeckung 5 unmittelbar hinter den Rückenlehnen 17 der Fahrzeugsitze 9 angeordnet ist.
Generell sind die Aufnahmen 11 und 11' derart ausgebildet, dass das bei der Montage der Laderaumabdeckung 5 zuerst positionierte Längsende 10 einfach in die Aufnahme 11 eingesteckt werden kann. Das danach montierte Längsende 10' wird von vorne, das heißt entgegen der Fahrrichtung 8, in die schubladenähnlich ausgestaltete Aufnahme 11' eingeschoben. Ist die Laderaumabdeckung 5 mit einem elektrisch angetriebenen Abdeckrollo 7 ausgerüstet, so erfolgt beim Einbau der Laderaumabdeckung 5 über die elektrische Kontaktierung 13 ein automatisches Verbinden des elektrischen Antriebes der Laderaumabdeckung 5 mit dem elektrischen Bordnetz des Kraftfahrzeuges 2. Die Kontaktierung 13 ist dabei vorzugsweise in der Aufnahme 11 vorgesehen, wobei auch denkbar ist, dass eine derartige elektrische Kontaktierung 13 in beiden Aufnahmen 11 und 11' vorgesehen ist.
Die gewählte Aufnahmeart, das heißt die erfindungsgemäße Montage entgegen der Fahrtrichtung 8, lässt hinsichtlich einer Säulenverkleidung den größtmöglichen gestalterischen Freiraum. Die Toleranzen zwischen den Aufnahmen 11 und 11' und den Längsenden 10, 10' der Laderaumabdeckung 5 werden dabei vorzugsweise von federnden Längsendkappen 16 aufgenommen, so dass ein gleichmäßiges Fugenbild entsteht.

## Patentansprüche

1. Abdeckanordnung (6) mit einer hinter einem Fahrzeugsitz (9), insbesondere hinter einem Fondsitz, angeordneten Laderaumabdeckung (5) in einem Kraftfahrzeug (2), welche sich in Fahrzeugquerrichtung erstreckt und mit ihren Längsenden (10, 10') in entsprechenden fahrzeugseitigen Aufnahmen (11, 11') gehalten ist, wobei die Laderaumabdeckung (5) in horizontaler Richtung in die fahrzeugseitigen Aufnahmen (11, 11') einführbar ist, **dadurch gekennzeichnet,**
- **dass** eine fahrerseitige Aufnahme (11) als vertiefte Aufnahme (11) ausgebildet ist, in die ein Längsende (10) der Laderaumabdeckung (5) in Fahrzeugquerrichtung horizontal einsteckbar ist, während eine beifahrerseitige Aufnahme (11') nach vorne geöffnet ist, so dass das andere Längsende (10') der Laderaumabdeckung (5) entgegen der Fahrtrichtung (8) des Kraftfahrzeugs (2) in die Aufnahme (11') einschwenkbar und in dieser verrastbar ist, oder umgekehrt, oder dass beide Aufnahmen (11, 11') nach vorne geöffnet sind.

2. Abdeckanordnung nach Anspruch 1, **dadurch gekennzeichnet, dass** die fahrzeugseitigen Aufnahmen (11, 11') an einer Innenverkleidung des Kraftfahrzeuges (2) angeordnet sind.

3. Abdeckanordnung nach Anspruch 1 oder 2, **dadurch gekennzeichnet, dass** die fahrzeugseitigen Aufnahmen (11, 11') im Bereich einer C-Säule des Kraftfahrzeuges (2) angeordnet sind.

4. Abdeckanordnung nach einem der Ansprüche 1 bis 3, **dadurch gekennzeichnet, dass** im Bereich der fahrerseitigen oder der beifahrerseitigen Aufnahme (11, 11') eine elektrische Kontakteinrichtung (13) vorgesehen ist, über welche eine, einen elektrischen Antrieb aufweisende Laderaumabdeckung (5) in eingebautem Zustand mit einem elektrischen Bordnetz des Kraftfahrzeuges (2) verbunden ist.

5. Abdeckanordnung nach einem der Ansprüche 1 bis 4, **dadurch gekennzeichnet, dass** an dem einen und/oder an dem anderen Längsende (10, 10') der Laderaumabdeckung (5) Rastelemente (14) vorgesehen sind, welche mit entsprechenden Gegenrastelementen oder Rastöffnungen (15) in den Aufnahmen (11, 11') zusammenwirken.

6. Abdeckanordnung nach einem der Ansprüche 1 bis 5, **dadurch gekennzeichnet, dass** zumindest eine Federeinrichtung vorgesehen ist, über welche zumindest eine Längsendkappe (16) der Laderaumabdeckung (5) oder zumindest eines der Rastelemente (14) in Längsrichtung der Laderaumabdeckung (5) von dieser weg vorgespannt ist.

7. Abdeckanordnung nach einem der Ansprüche 1 bis 6, **dadurch gekennzeichnet, dass** die Laderaumabdeckung (5) unmittelbar hinter dem Fahrzeugsitz (9) angeordnet ist oder dass die Laderaumabdeckung (5) eine Spaltabdeckung (19) aufweist, welche insbesondere bei Fahrzeugsitzen (9) mit verstellbaren Rückenlehnen (17) einen Spalt (18) zwischen der Rückenlehne (17) und der Laderaumabdeckung (5) abdeckt.

8. Abdeckanordnung nach Anspruch 7, **dadurch gekennzeichnet, dass** die Spaltabdeckung (19) in Richtung der Rückenlehne (17) vorgespannt ist.

9. Kraftfahrzeug mit einer Abdeckanordnung (6) nach einem der Ansprüche 1 bis 8.

## Claims

1. Covering arrangement (6) with a loading space covering (5), which is arranged behind a vehicle seat (9), in particular behind a rear seat, in a motor vehicle (2), said loading space covering extending in the transverse direction of the vehicle and being held at its longitudinal ends (10, 10') in corresponding receptacles (11, 11') on the vehicle, wherein the loading space covering (5) can be introduced in a horizontal direction into the receptacles (11, 11') on the vehicle, **characterized**
- **in that** a receptacle (11) on the driver's side is designed as a recessed receptacle (11) into which one longitudinal end (10) of the loading space covering (5) can be inserted horizontally in the transverse direction of the vehicle, while a receptacle (11') on the passenger's side is open to the front such that the other longitudinal end (10') of the loading space covering (5) can be pivoted counter to the direction of travel (8) of the motor vehicle (2) into the receptacle (11') and can be latched therein, or vice versa, or in that both receptacles (11, 11') are open to the front.

2. Covering arrangement according to Claim 1, **characterized in that** the receptacles (11, 11') on the vehicle are arranged on an inner lining of the motor vehicle (2).

3. Covering arrangement according to Claim 1 or 2, **characterized in that** the receptacles (11, 11') on the vehicle are arranged in the region of a C pillar of the motor vehicle (2).

4. Covering arrangement according to one of Claims 1 to 3, **characterized in that** an electric contact device (13) is provided in the region of the receptacle (11, 11') on the driver's side or the passenger's side, via which contact device a loading space covering (5), which has an electric drive, is connected, in the fitted state, to an electric system of the motor vehicle (2).

5. Covering arrangement according to one of Claims 1 to 4, **characterized in that** latching elements (14) which interact with corresponding mating latching elements or latching openings (15) in the receptacles (11, 11') are provided at the one and/or at the other longitudinal end (10, 10') of the loading space covering (5).

6. Covering arrangement according to one of Claims 1 to 5, **characterized in that** at least one spring device is provided, via which at least one longitudinal end cap (16) of the loading space covering (5) or at least one of the latching elements (14) is prestressed away from the loading space covering (5) in the longitudinal direction thereof.

7. Covering arrangement according to one of Claims 1 to 6, **characterized in that** the loading space covering (5) is arranged directly behind the vehicle seat (9), or **in that** the loading space covering (5) has a gap covering (19) which, in particular in the case of vehicle seats (9) with adjustable backrests (17), covers a gap (18) between the backrest (17) and the loading space covering (5).

8. Covering arrangement according to Claim 7, **characterized in that** the gap covering (19) is prestressed in the direction of the backrest (17).

9. Motor vehicle with a covering arrangement (6) according to one of Claims 1 to 8.

## Revendications

1. Agencement de recouvrement (6) comprenant un recouvrement de l'espace de chargement (5) dans un véhicule automobile (2), disposé derrière un siège de véhicule (9), en particulier derrière un siège arrière, lequel agencement de recouvrement s'étend dans la direction transversale du véhicule et est maintenu avec ses extrémités longitudinales (10, 10') dans des logements correspondants (11, 11') du côté du véhicule, le recouvrement de l'espace de chargement (5) pouvant être introduit dans la direction horizontale dans les logements (11, 11') du côté du véhicule, **caractérisé en ce**
- **qu**'un logement (11) du côté du conducteur est réalisé sous forme de logement renfoncé (11), dans lequel une extrémité longitudinale (10) du recouvrement de l'espace de chargement (5) peut être enfoncée horizontalement dans la direction transversale du véhicule, tandis qu'un logement (11') du côté du passager est ouvert vers l'avant, de sorte que l'autre extrémité longitudinale (10') du recouvrement de l'espace de chargement (5) puisse pivoter à l'encontre de la direction de conduite (8) du véhicule automobile (2) dans le logement (11') et s'encliqueter dans celui-ci, ou inversement, ou en ce que les deux logements (11, 11') sont ouverts vers l'avant.

2. Agencement de recouvrement selon la revendication 1, **caractérisé en ce que** les logements (11, 11') du côté du véhicule sont disposés sur un habillage interne du véhicule automobile (2).

3. Agencement de recouvrement selon la revendication 1 ou 2, **caractérisé en ce que** les logements (11, 11') du côté du véhicule sont disposés dans la région d'une colonne C du véhicule automobile (2).

4. Agencement de recouvrement selon l'une quelconque des revendications 1 à 3, **caractérisé en ce que** dans la région du logement (11, 11') du côté du conducteur ou du côté du passager est prévu un dispositif de contact électrique (13) par le biais duquel un recouvrement de l'espace de chargement (5) présentant un entraînement électrique est connecté dans l'état monté à un réseau électrique de bord du véhicule automobile (2).

5. Agencement de recouvrement selon l'une quelconque des revendications 1 à 4, **caractérisé en ce qu'**à l'une et/ou l'autre extrémité longitudinale (10, 10') du recouvrement de l'espace de chargement (5) sont prévus des éléments d'encliquetage (14), qui coopèrent avec des éléments d'encliquetage conjugués correspondants ou des ouvertures d'encliquetage (15) correspondantes dans les logements (11, 11').

6. Agencement de recouvrement selon l'une quelconque des revendications 1 à 5, **caractérisé en ce qu'**au moins un dispositif de ressort est prévu, par le biais duquel au moins un capuchon d'extrémité longitudinal (16) du recouvrement de l'espace de chargement (5) ou au moins l'un des éléments d'encliquetage (14) est précontraint dans la direction longitudinale du recouvrement de l'espace de chargement (5) à l'écart de celui-ci.

7. Agencement de recouvrement selon l'une quelconque des revendications 1 à 6, **caractérisé en ce que** le recouvrement de l'espace de chargement (5) est disposé directement derrière le siège du véhicule (9) ou **en ce que** le recouvrement de l'espace de chargement (5) présente un recouvrement d'interstice (19) qui recouvre, en particulier pour les sièges de véhicule (9) avec des dossiers réglables (17), un interstice (18) entre le dossier (17) et le recouvrement de l'espace de chargement (5).

8. Agencement de recouvrement selon la revendication 7, **caractérisé en ce que** le recouvrement d'interstice (19) est précontraint dans la direction du dossier (17).

9. Véhicule automobile comprenant un agencement de recouvrement (6) selon l'une quelconque des revendications 1 à 8.
